Europäisches Patentamt

European Patent Office

Office européen des brevets

(11) Veröffentlichungsnummer: **0 318 746 B1**

## (12) EUROPÄISCHE PATENTSCHRIFT

(45) Veröffentlichungstag der Patentschrift: **04.11.92**

(21) Anmeldenummer: **88118907.0**

(22) Anmeldetag: **12.11.88**

(51) Int. Cl.⁵: **B60J** **1/00**, B25B 27/00

---

(54) **Einziehwerkzeug.**

---

(30) Priorität: **28.11.87 DE 3740464**

(43) Veröffentlichungstag der Anmeldung:
**07.06.89 Patentblatt  89/23**

(45) Bekanntmachung des Hinweises auf die
Patenterteilung:
**04.11.92 Patentblatt  92/45**

(84) Benannte Vertragsstaaten:
**BE CH DE ES FR GB IT LI NL SE**

(56) Entgegenhaltungen:
**DE-A- 2 848 902**
**DE-U- 8 623 273**
**US-A- 2 688 243**

(73) Patentinhaber: **MAN Nutzfahrzeuge Aktiengesellschaft**
**Dachauer Strasse 667 Postfach 50 06 20**
**W-8000 München 50(DE)**

(72) Erfinder: **Vesely, Ivan**
**Ignaz-Günther-Strasse 13**
**W-8150 Holzkirchen(DE)**
Erfinder: **Kreitmair, Xaver**
**Münchner Strasse 50**
**W-8060 Dachau(DE)**

Rank Xerox (UK) Business Services

## Beschreibung

Die Erfindung bezieht sich auf ein Einziehwerkzeug für die in die Dichtungen von Fensterrahmen an Nutzfahrzeugen einzubringenden Fensterrahmen-Füller, mit einem Handgriff und einem daran anschließenden Einziehteil, das eine Führungsbohrung für den Fensterrahmenfüller aufweist.

Es sind verschiedene Einziehwerkzeuge für das Einbringen unterschiedlicher Fensterrahmen-Füller bekannt, die aber zum Teil schwierig zu handhaben sind, keine ergonometrische Formgebung aufweisen und sich entweder nur zum Einziehen oder aber nur zum Einschieben des Fensterrahmen-Füllers eignen.

So kann der DE-U-623 273 ein Werkzeug zum Arbeiten mit Profilgummi mit einem die Handhabung ermöglichenden Griff entnommen werden, wobei an einem Ende des Handgriffs eine Anhebevorrichtung und am anderen Ende eine Ziehvorrichtung mit einer Führungsbohrung vorgesehen sind.

Der Erfindung liegt die Aufgabe zugrunde, ein Universalwerkzeug für das Einbringen unterschiedlicher Füllerprofile bei wahlweiser Anwendung als Zieh-oder Schiebewerkzeug zu schaffen.

Dies wird erfindungsgemäß dadurch erreicht, daß das Einziehteil bananenartig gebogen ist und an seinem freien Ende schnabelförmig mit innenseitig daan anschließender Hohlkehle ausgebildet ist, daß die Führungsbohrung im Einziehteil innenseitig desselben in seiner Längserstreckung verläuft, im am Handgriff angrenzenden Bereich des Einziehteils beginnt und unterhalb der Hohlkehle mündet und daß der Bereich des Schnabels, der Hohlkehle und der Bohrungsmündung in Richtung der Führungsbohrung elliptisch oder ähnlich ausgebildet ist. Solcherart wird durch die ergonometrische Ausbildung des Werkzeuges eine bessere Übertragung und Verteilung der Zieh-, Druck- und Abstützkraft erzielt. Der Anwender kann gleichermaßen, z.B. in Abhängigkeit von der Raumsituation oder seiner persönlichen Präferenz das Universalwerkzeug zum Einziehen oder Einschieben des Füllerprofils benutzen. Die elliptische Form des unteren Ziehteilbereichs dient zum Aufspreizen der Nut des Dichtungsprofils und erlaubt verschiedene Drehbewegungen. Die durchgehende Führungsbohrung im Einzelteil mit ihrer Mündung im Bereich der Hohlkehle und die schnabelförmige Nase gewährleisten eine extrem gute Führung und ein sicheres Eindrücken des Füllerprofils ohne großen Kraftaufwand.

Nach einem vorteilhaften Merkmal der Erfindung sind Patronen mit unterschiedlichen Füllerprofilen in die Führungsbohrung einsetzbar und auswechselbar. Auf diese Weise wird der Anwendungsbereich des Einziehwerkzeuges noch wesentlich erweitert, gestattet es doch so unter schneller Auswechslung der Patrone den Einsatz unterschiedlich konturierter Füllerprofile.

Nach anderen Merkmalen der Erfindung ist das Werkzeug aus Kunststoff, vorzugsweise aus Polyacetal hergestellt. Daraus ergibt sich eine Reihe von Vorteilen, wie sehr gute Gleiteigenschaften, geringe Verletzungsgefahr und insbesondere bei Verwendung von Delrin (Warenzeichen) geringe Formveränderung durch minimale Veränderungen infolge Feuchtigkeitsaufnahme.

In weiterer Ausgestaltung der Erfindung kann das Einziehwerkzeug eine Schraubendreherspitze aufweisen. Solcherart können Dichtungsprofile auch abgehoben werden.

Weitere Vorteile und Merkmale der Erfindung sind den Ansprüchen, der Figurenbeschreibung und den Zeichnungen zu entnehmen.

Die Erfindung ist in einem Ausführungsbeispiel dargestellt.

Es zeigen:

Figur 1: ein Einziehwerkzeug in der Seitenansicht in Funktion

Figur 2: die Ansicht "A" des Einziehwerkzeugs nach Figur 1.

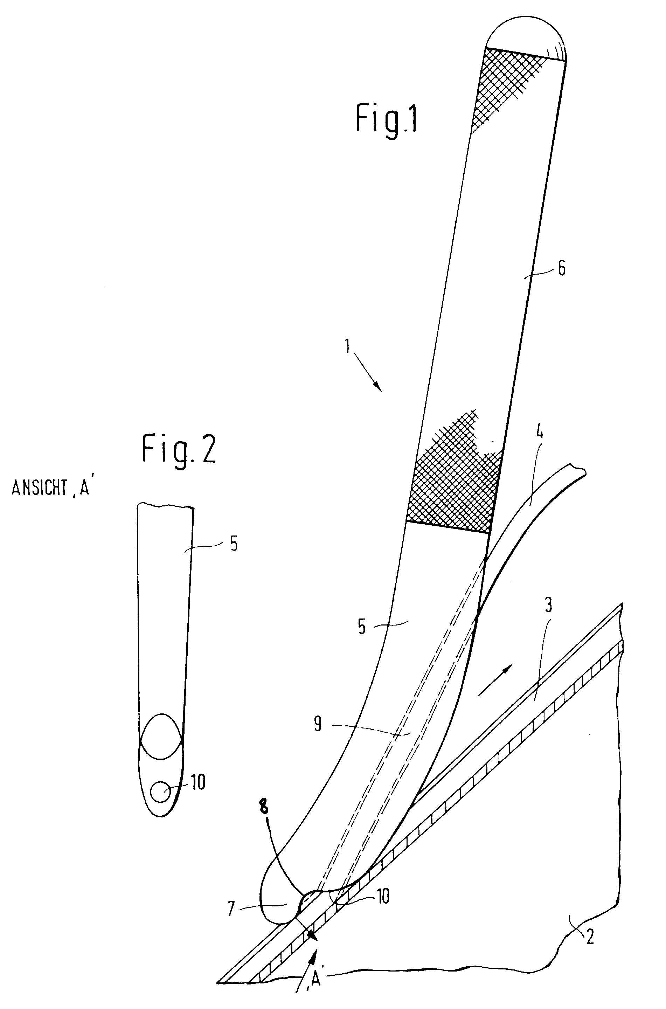

Figur 1 zeigt das Einziehwerkzeug 1 beim Einbringen eines Fensterrahmen-Füllers 4 in die Nut der Dichtung 3 des Fensterrahmens 2. Das Einziehwerkzeug 1 besteht im wesentlichen aus einem Handgriff 6 und einem mit diesem, vorzugsweise einstückig verbundenen Einziehteil 5. Das freie Ende des Einziehteils 5 ist schnabelartig 7 ausgebildet, wobei die schnabelartige Nase die Nut der Dichtung 3 aufspreizt. An der Nase des schnabelartigen Endes 7 schließt sich eine Hohlkehle 8 an, die über einen gekrümmten Bereich mit der Innenseite des Einziehteilbereichs konstanten Querschnitts verbunden ist. In der Längserstreckung des Einziehteils ist eine Führungsbohrung 9 für die Aufnahme des Fensterrahmen-Füllers 4 vorgesehen, die im am Handgriff 6 angrenzenden Bereich des Einziehteils 5 beginnt und ihre Mündung 10 unterhalb der Hohlkehle 8 hat. Das Einziehwerkzeug wird aus Kunststoff hergestellt, kann solcherart in seiner speziellen bananenartigen Ausführung gespritzt oder gegossen werden und liegt dem Anwender gut in der Hand. Der Anwender kann es gleichermaßen als Zieh- oder Schiebewerkzeug einsetzen, wie es die jeweilige Montagesituation erfordert oder wie es seiner Neigung entspricht. Mit der speziellen Auswahl von Delrin kommt ein Werkstoff mit guten Festigkeitseigenschaften und geringer Wasseraufnahmefähigkeit, also hoher Formstabilität, zur Anwendung.

Indem der Handgriff 6 geriffelt oder gerändelt ist, verbessert sich seine Griffigkeit. Durch Integration einer Schraubendreherspitze wird der Anwendungsbereich des Universalwerkzeuges noch erweitert, indem auch die Dichtungsprofile ausgehoben werden können.

Bezugszeichenliste

1   Einziehwerkzeug
2   Fensterrahmen
3   Dichtung
4   Fensterrahmen-Füller
5   Einziehteil
6   Handgriff
7   Schnabelförmiges Ende von 5
8   Hohlkehle an 7
9   Führungsbohrung in 5
10  Mündung von 9

**Patentansprüche**

1.  Einziehwerkzeug für die in die Dichtungen von Fensterrahmen an Nutzfahrzeugen einzubringenden Fensterrahmen-Füller, mit einem Handgriff und einem daran anschließenden Einziehteil, das eine Führungsbohrung für den Fensterrahmen-Füller aufweist, dadurch gekennzeichnet,
    - daß das Einziehteil (5) bananenartig gebogen ist und an seinem freien Ende schnabelförmig (7) mit innenseitig daran anschließender Hohlkehle (8) ausgebildet ist,
    - daß die Führungsbohrung (9) im Einziehteil (5) innenseitig in Längserstreckung desselben verläuft, im am Handgriff (6) angrenzenden Bereich des Einziehteils (5) beginnt und unterhalb der Hohlkehle (8) mündet,
    - und daß der Bereich des Schnabels (7), der Hohlkehle (8) und der Bohrungsmündung (10) in Richtung der Führungsbohrung (9) elliptisch oder ähnlich ausgebildet ist.

2.  Einziehwerkzeug nach Anspruch 1, dadurch gekennzeichnet, daß in die Führungsbohrung (9) Patronen mit unterschiedlichen Füllerprofilen einsetzbar und auswechselbar sind.

3.  Einziehwerkzeug nach Anspruch 1 oder 2, dadurch gekennzeichnet, daß der Handgriff (6) mit dem Einziehteil (5) einstückig ausgebildet ist.

4.  Einziehwerkzeug nach den Ansprüchen 1 - 3, dadurch gekennzeichnet, daß das Werkzeug aus Kunststoff geformt ist.

5.  Einziehwerkzeug nach Anspruch 4, dadurch gekennzeichnet, daß das Werkzeug aus Polyacetal geformt ist.

6.  Einziehwerkzeug nach einem oder mehreren der Ansprüche 1 - 5, dadurch gekennzeichnet, daß der Handgriff (6) gerändelt oder geriffelt ist.

7.  Einziehwerkzeug nach einem oder mehreren der Ansprüche 1 - 6, dadurch gekennzeichnet, daß das Einziehwerkzeug eine Schraubendreherspitze aufweist.

**Claims**

1.  A drawing tool for window-frame fillers to be introduced into the seals of window frames of commercial vehicles, with a handle and a drawing part adjoining it and having a guide bore for the window-frame filler, characterized in that
    - the drawing part (5) is bent into a banana shape and has its free end formed in the shape of a bird's bill (7) with a cavity (8) adjoining it on the inside,
    - the guide bore (9) in the drawing part (5) extends on the inside in the longitudinal extension thereof, begins in the region of the drawing part (5) adjoining the handle (6) and opens below the cavity (8), and
    - the region of the bill (7), the cavity (8) and the bore opening (10) is made elliptical or in a similar shape in the direction towards the guide bore (9).

2.  A drawing tool according to Claim 1, characterized in that cartridges with different filler sections can be inserted and replaced in the guide bore (9).

3.  A drawing tool according to Claim 1 or 2, characterized in that the handle (6) is constructed integrally with the drawing part (5).

4.  A drawing tool according to Claims 1 to 3, characterized in that the tool is formed from plastics material.

5.  A drawing tool according to Claim 4, characterized in that the tool is formed from polyacetal.

6.  A drawing tool according to one or more of Claims 1 to 5, characterized in that the handle (6) is knurled or corrugated.

7.  A drawing tool according to one or more of Claims 1 to 6, characterized in that the drawing tool has a screwdriver tip.

**Revendications**

1.  Outil d'installation pour introduire une charge de châssis de fenêtre dans les joints de châssis de fenêtre de véhicules utilitaires, outil comportant une poignée à laquelle est reliée une pièce d'installation qui présente un perçage de guidage pour la charge de châssis de fenêtre, outil caractérisé en ce qu'à :
    - la pièce d'installation (5) est courbée en forme de banane et son extrémité libre (7) en forme de bec comporte une gorge (8) adjacente sur le côté intérieur,
    - le perçage de remplissage (9) de la pièce d'installation (5) est dirigé sur le côté intérieur dans l'extension longitudinale de la pièce et commence dans la zone de la pièce d'introduction (5) adjacente à la poignée (6) et débouche en-dessous de la gorge (8),
    - la zone du bec (7), de la gorge (8) et de l'orifice (10) du perçage est de forme elliptique ou analogue en direction du perçage de guidage (9).

2.  Outil d'installation selon la revendication 1, caractérisé en ce que le perçage de guidage (9) peut recevoir de manière interchangeable des cartouches de profils de charge différents.

3.  Outil d'installation selon les revendications 1 ou 2, caractérisé en ce que la poignée (6) fait corps avec la pièce d'installation (5).

4.  Outil d'installation selon les revendications 1 à 3, caractérisé en ce qu'il est moulé en matière synthétique.

5.  Outil d'installation selon la revendication 4, caractérisé en ce qu'il est moulé en polyacétal.

6.  Outil d'installation selon l'une ou plusieurs des revendications 1 à 5, caractérisé en ce que la poignée (6) est moletée ou rainurée.

7.  Outil d'installation selon l'une ou plusieurs des revendications 1 à 6, caractérisé en ce qu'il comporte une extrémité en forme de tournevis.

Fig.1

Fig.2

ANSICHT ,A'